# EUROPÄISCHE PATENTSCHRIFT

(11) **EP 1 047 493 B1**
(45) Veröffentlichungstag und Bekanntmachung des Hinweises auf die Patenterteilung: **05.06.2002**
(21) Anmeldenummer: 98954453.1
(22) Anmeldetag: 27.10.1998
(51) Int. Cl.: B01J 3/00, B01J 35/06, B01D 3/00

(54) **GESTRICKE ALS KATALYTISCHE FÜLLUNGEN FÜR REAKTIVTRENNVERFAHREN**
INTERTWINED STRUCTURES AS CATALYTIC FILLINGS FOR REACTIVE SEPARATION METHODS
STRUCTURES EN FIL METALLIQUE EN TANT QUE GARNITURES CATALYTIQUES POUR PROCEDES DE SEPARATION PAR REACTION

(30) Priorität: 03.11.1997 DE 19748468
(43) Veröffentlichungstag der Anmeldung: 02.11.2000
(73) Patentinhaber: Siemens Axiva GmbH & Co. KG, 65926 Frankfurt am Main (DE)
(72) Erfinder: DAIMINGER, Ulrich, D-65189 Wiesbaden (DE); SIEVERS, Werner, D-65929 Frankfurt am Main (DE); KNAUF, Rüdiger, D-65719 Hofheim (DE); SEMEL, Joachim, D-61462 Königstein (DE); STEINER, Rudolf, D-91056 Erlangen (DE); BECKER, Oliver, D-91207 Lauf-Schönberg (DE)
(86) Internationale Anmeldenummer: EP9806812
(87) Internationale Veröffentlichungsnummer: WO9922856

(56) Entgegenhaltungen:
- WO-A-97/24174
- DE-A- 19 624 130
- NL-A- 9 000 454
- US-A- 5 266 546
- US-A- 5 431 890

## Beschreibung

Die Erfindung betrifft katalytisch wirksame Oberflächenbildner für Flüssigkeiten.

Oberflächenbildner dieser Art sind in der chemischen Verfahrenstechnik bekannt und werden beispielsweise in Kolonnen eingesetzt. So offenbart USP 4,250,052 Sattelfüllkörper, Ringe, Pellets (Kugeln), Scheiben, Platten oder Röhren, die mit einem katalytisch aktiven Polymer beschichtet sind. Weiter lehrt DE 196 11 395 die Verwendung von katalytisch wirksamen Gestricken aus Metall in einem Strömungsreaktor, wobei die Trennung des Reaktionsgemisches in nachgeschalteten Trennsäulen erfolgt Aus DE 43 03 850 sind zur Reinigung von Abgasen von Verbrennungsmotoren Katalysatoren in Form von Gestricken bekannt, bei denen ein warmfestes Fasermaterial mit einem katalytisch wirksamen Material beschichtet ist und aus DE 32 29 905 kennt man einen Filz aus mit Katalysatoren überzogenen Kohlenstoffasem zur Verwendung in einem Festbettreaktor.

Während die erstgenannten regellosen Schüttfüllkörper für Trennverfahren den Nachteil haben, daß gegenüber strukturierten Packungen, wie sie auch Drahtgestricke darstellen, nur eine vergleichsweise geringe Trennwirkung und ein höherer Druckverlust bei der gleichzeitig ablaufenden Destillation gegeben ist, ist bei den strukturierten Packungen, die ohne Katalysator in Trennverfahren eingesetzt werden, zu bemängeln, daß bei Gleichgewichtsreaktionen, Folge- und Parallelreaktionen, d. h. der Mehrzahl der technisch durchgeführten Reaktionen, die Trennung von Reaktion und Destillation geringere Umsatzgrade und Selektivitäten bedingt.

Darüber hinaus sei auf die WO -A 97/48466 verwiesen, die am 24.12. 1997 veröffentlicht wurde und für die Vertragsstaaten AT, BE, CH, LI, DE, DK, ES, FI, FR, GB, IT, NL, PT, SE Stand der Technik gemäß Artikel 54(3) und(4) EPÜ ist. Dieses Dokument offenbart Gewebe und Gewirke, die mit metallischen Katalysatoren beschichtet sind, zur Verwendung in Reaktivdestillationen.

Gegenstand der Erfindung ist die Verwendung von Gestrichen, die einen Katalysator aufweisen, insbesondere einen Katalysator aus Kunststoff, für Reaktivtrennverfahren.

Bevorzugte Ausgestaltungen ergeben sich aus den Unteransprüchen. Es können auch einzelne oder mehrere der in den Unteransprüchen offenbarten Ausgestaltungen jeweils für sich oder in Kombination Lösungen der zugrundeliegenden Aufgabe darstellen und es sind auch die einzelnen Merkmale innerhalb der Anspruchskategorien beliebig kombinierbar.

Gestricke im Sinne der Erfindung sind drahtartige Geflechte, Gewebe oder Gewirke, oder Knäuel, die geordnet oder ungeordnet und/oder beschichtet oder unbeschichtet sein können. Die Gestricke können über kurze Abstände von bis zu beispielsweise 10 cm ungeordnet sein, über größere Abstände jedoch eine Ordnungsstruktur aufweisen. Die Gestricke können flächige, oder textile Struktur haben, gefaltet oder ungefaltet, wie z. B. in DE 43 03 850 offenbart, sie können sich aber auch, beispielsweise als Knäuel, dreidimensional im Raum erstrecken,

Die katalytisch wirksamen, beschichteten oder unbeschichteten Gestricke zeigen überraschenderweise auch sehr gutes Trennvermögen in thermischen Trennoperationen wie z. B. der Destillation, der Absorption oder der Extraktion. Die Kombination von katalytischen Eigenschaften und Trenneigenschaften kann daher erfindungsgemäß in Anwendungen wie der Reaktivdestillation oder Reaktivextraktion ausgenützt werden, die dadurch gekennzeichnet sind, daß beide Phasen im Gegenstrom oder im Kreuzstrom zueinander strömen. Das Überraschende an der Erfindung, daß beide Effekte trotz der einfachen Struktur und des geringen Ordnungsgrades - bei Drahtknäuel beispielsweise - gleichzeitig deutlicher auftreten, als man aus der Erfahrung mit strukturierten Packungen (EP 008 860) erwarten würde; zusätzlich besitzen diese Elemente aber die einfache Handhabbarkeit von strukturierten Destillationspackungen.

Der auf das Gestrick aufgebrachte Katalysator kann ein Metall oder ein Kunststoff, vorzugsweise ein funktionalisiertes Polymer sein. In einer besonderen Ausgestaltung ist der Katalysator ein saurer lonenaustauscher, vorzugsweise ein Katalysator, der entsprechend Schriften EP 0 575 807 A1, EP 0 574 791 A2, DE 195 10 026 und PCT 97/05191 auf Basis von aromatischen Polyetherketonen oder Polyphenylensulfiden hergestellt wurde. Als Derivat eines Hochleistungspolymers kann der verwendete Katalysator über einen Temperatureinsatzbereich von 35 - 240 °C (kurzzeitig bis 280 °C) ohne Verlust der Stabilität und der Aktivität eingesetzt werden. Allgemein sind jedoch auch andere Katalysatoren (z. B. basische lonenaustauscher oder auch auf Basis von Edelmetallen und deren Verbindungen beruhende Katalysatoren) einsetzbar. Die Art der katalysierten Reaktion ist grundsätzlich beliebig so z.B. auch Hydrierungen, Oxidationen, Sulfonierungen, Nitrierungen, besonders vorteilhaft werden jedoch folgende Reaktionen katalysiert: Veresterungen, Veretherungen, Acetalisierung sowie deren Umkehrreaktionen, sowie auch Hydratisierungen, Eliminierungen und Alkylierungen.

Der Katalysator kann entweder rein physikalisch auf dem Trägergewebe aufgebracht werden oder auch chemisch, gegebenenfalls unter Verwendung eines Hilfsstoffs damit verbunden werden. Es kann auch das Gestrick selbst aus Katalysatormaterial bestehen. Die Katalysatorschicht kann unabhängig vom Trägermaterial sowohl makroporös als auch glatt ausgebildet sein. Ihre Dicke kann größer sein als 0,1 bzw. 1 bzw. 10 bzw. 100 bzw. 500 µm. Vorzugsweise liegt sie in einem Bereich von 10 bis 200 µm.

Die Gestricke können aus Metall oder Kunststoffen gefertigt sein und zu Packungselementen aufgewickelt werden. Auch eine Fertigung aus dem Katalysatormaterial selbst bzw. aus dem Katalysatorgrundmaterial mit anschließender Derivatisierung der Oberfläche zur katalytisch wirksamen Schicht ist möglich. Die Oberflächenstruktur des Trägergewebes kann sowohl glatt als auch porös ausgebildet sein. Bei den Packungselementen kann es sich um axial gewickelte grobgestrickte Gewebe handeln.

Die Herstellung von Kationenaustauscher als Katalysatoren auf Basis von aromatischen Polyetherketonen oder Polyphenylensulfiden für beschichtete Gestricke kann folgendermaßen erfolgen: Das aromatische Polymer wird in Schwefelsäure von 94-97 Gew.-% gelöst und die Lösung mit einem sulfonierenden Agens, z.B. Oleum, versetzt, bis die Schwefelsäurekonzentration 98-99.9 Gew.-% beträgt. Ist der gewünschte Sulfonierungsgrad erreicht, wird der Reaktionsansatz aufgearbeitet. Die Sulfonierung von Polyphenylensulfid findet in einer Mischung aus Oleum und Chlorsulfonsäure statt.

Die Materialien fallen bis zu lonenaustauscheräquivalenten von 1,0 mMol SO₃H/g als in NMP (N-Methyl-2-pyrrolidon) unlösliche Pulver an. Ab lonenaustauscheräquivalenten von 1,0 mMol SO₃H/g werden die Polymere in NMP oder DMSO (Dimethylsulfoxid) löslich. Wird der Sulfonierungsgrad weiter erhöht, steigt die Polarität des Polymers, und ab einem lonenaustauscheräquivalent von 1,8 mMol SO₃H/g wird das Material wasserlöslich.

Diese hochtemperaturbeständigen lonenaustauscher zeigen als Derivate von Hochleistungspolymeren erstaunlich hohe chemische und thermische Beständigkeit. Nach DSC- und TGA-Untersuchungen kann bei Heizraten von 10°C/min ein thermisches Desulfonieren erst oberhalb von 300°C beobachtet werden.

Die Beschichtung eines Gestrickes mit einem Katalysator kann wie im nachfolgenden Beispiel beschrieben durchgeführt werden. Eine Beschränkung der Erfindung ist dadurch nicht beabsichtigt.

Bekannte Packungen aus Edelstahl-Runddraht (spez. Oberfläche ca. 280 m²/m³) wurden mit 4-8 Gew.-% des katalytischen Materials (z.B. temperaturbeständiges sulfoniertes Polymer; Äquivalentgewicht 1,62 mMol SO₃H/g Polymer) entsprechend einem Auftragsgewicht von ca. 12-25 g/m² (10-20 um) beschichtet. Der Auftrag erfolgte durch wiederholtes Besprühen der abgerollten Packungselemente mit einer Polymerlösung bestehend aus 4 Gew.-% Polymer, 28 Gew.-% Butylacetat und 68 Gew.-% N-Methylpyrrolidon (NMP) mit jeweils anschließendem Antrocknen des Films bei ca. 150°C. Nach Erreichen des Auftragsgewichtes wurden die Packungen zunächst für mehrere Stunden bei ca. 80°C bis zur Massenkonstanz getrocknet und anschließend wegen des stark hygroskopischen Verhaltens luftdicht verpackt.

Eine derartig hergestellte Packung kann vorteilhaft in Verbindung mit konventionellen, strukturierten Kolonnenpackungen oder Füllkörpern in einer Destillationskolonne verwendet werden.

Die nachfolgende beschriebenen Versuche mit solchen beschichteten Gestricken dienen der Erläuterung der Erfindung. Eine Beschränkung in irgendeiner Weise ist nicht beabsichtigt.

### Versuch im Rührkessel:

Als Nachweis der katalytischen Aktivität und Beständigkeit der Beschichtung wurden 7,83 g der beschichteten Packung (davon 0,6 g Katalysator) zu 180,15 g Essigsäure und 222,36 g 2-Butanol in einen gerührten Kessel gegeben. Diese Mischung wurde 5 h unter Rückfluß gekocht. Nach Abzug der Brüden und Kondensation fiel entsprechend dem Ergebnis der chemischen Reaktion ein 2-phasiges Destillat an (wäßrige Phase und organische Phase; die organische Phase besteht hauptsächlich aus dem Reaktionsprodukt Butylacetat). Das abgenommene Destillat (ca. 60-80 ml) bestand zu ca. 70-80 Vol.-% aus der organischen Phase.

Nach 3 derartigen Versuchen wurden die Packungselemente mit Wasser gespült und 3 h bei 55 °C und 1 mbar im Vakuumtrockenschrank getrocknet. Dabei zeigte sich ein maximaler Verlust von 0,12 g, dies entspricht maximal 20 % des Katalysatormaterials. Der Verlust setzte sich dabei zusammen aus abgelöstem Katalysator und mechanischen Abrieb.

### Kolonnenversuche:

Als Nachweis der Einsatzmöglichkeit der beschichteten Packung in einem kontinuierlichen, kombinierten Reaktions/Separationssystemen (z. B. Reaktivdestillation) wurde die Packung in eine Kolonne eingebaut. Als beispielhaftes Testsystem wurde die Veresterung der von Essigsäure und 1-Butanol und nachfolgende Trennung der Reaktionsprodukte Wasser und Butylacetat untersucht.

Die Kolonne (Glas, silberverspiegelter Vakuummantel) bestand neben dem Reaktionsteil (Durchmesser = DN 45, Länge = 1 m; bestückt mit 4 Reaktivpackungselementen) aus einem Abtriebsteil (Durchmesser = DN 30, Länge = 1 m; Sulzer EX-Packung) und einem Auftriebsteil (Durchmesser = DN 30, Länge = 1 m; Sulzer EX-Packung) unter bzw. über dem Reaktionsteil. Die Zuspeisung der flüssig-siedenden Edukte erfolgte, gesteuert über den Massestrom, so, daß das 1-Butanol über dem Reaktionsteil und die Essigsäure unter dem Reaktionsteil zugeführt wurde. Als Verdampfer wurde ein Naturumlaufverdampfer mit drei elektrischen Heizkerzen (max. Heizleistung = 2180 Watt) eingesetzt. Die Sumpfabnahme erfolgte ebenfalls massegesteuert. Am Kopf erfolgte in einem außenliegenden Kondensator eine Totalkondensation. In einem Phasenteiler wurde die spezifisch schwerere Wasserphase als Destillat abgezogen, die spezifisch leichtere organische Phase wurde als Rücklauf auf die Kolonne gegeben.

Bei einer Heizleistung von Q = 818 Watt und einer Zuspeisung von 230 g/h Essigsäure und 270 g/h 1-Butanol sowie einer eingestellten Sumpfentnahme von 468 g/h wurde dabei ein Umsatz von ≥ 50 % erzielt (Sumpftemperatur: 120 °C, Kopftemperatur: 90 °C). Die Reinheit des Kopfprodukts, d. h. des gebildeten Butylacetats betrug dabei 99,8 %.

## Patentansprüche (Patentansprüche für folgende(n) Vertragsstaat(en): AT, BE, CH, LI, DE, DK, ES, FI, FR, GB, IT, NL, PT, SE)

1. Verwendung von Gestricken, die einen Kunststoff als Katalysator aufweisen für Reaktivtrennverfahren.

2. Verwendung nach Anspruch 1, wobei das Gestrick mit dem Kunststoff beschichtet ist.

3. Verwendung nach Anspruch 1 oder 2, wobei der Kunststoff ein saurer lonenaustauscher ist

4. Verwendung nach einem oder mehreren der vorstehenden Ansprüche, wobei der Kunststoff ein aromatisches Polyetherketon oder Polyphenylensulfid ist.

## Patentansprüche (Patentansprüche für folgende(n) Vertragsstaat(en): CY, GR, IE, LU)

1. Verwendung von Gestricken, die einen Katalysator aufweisen für Reaktivtrennverfahren.

2. Verwendung nach Anspruch 1, wobei das Gestrick mit dem Katalysator beschichtet ist.

## Claims (Claims for the following Contracting State(s): AT, BE, CH, LI, DE, DK, ES, Fl, FR, GB, IT, NL, PT, SE)

1. The use for reactive separation processes of drawn-loop knits comprising a polymeric material as a catalyst.

2. A use as claimed in claim 1, wherein the drawn-loop knit is coated with the polymeric material.

3. A use as claimed in claim 1 or 2, wherein the polymeric material is an acidic ion exchanger.

4. A use as claimed in one or more of the preceding claims, wherein the polymeric material is an aromatic polyether ketone or polyphenylene sulfide.

## Claims (Claims for the following Contracting State(s): CY, GR, IE, LU)

1. The use for reactive separation processes of drawn-loop knits comprising a catalyst.

2. A use as claimed in claim 1, wherein the drawn-loop knit is coated with the catalyst.

## Revendications (Revendications pour l'(les) Etat(s) contractant(s) suivant(s): AT, BE, CH, LI, DE, DK, ES, FI, FR, GB, IT, NL, PT, SE)

1. Utilisation de structures tricotées, qui présentent une substance synthétique comme catalyseur pour un procédé de séparation réactive.

2. Utilisation selon la revendication 1, dans laquelle la structure tricotée est revêtue avec la substance synthétique.

3. Utilisation selon la revendication 1 ou 2, dans laquelle la substance synthétique est un échangeur d'ions acide.

4. Utilisation selon une ou plusieurs des revendications précédentes, dans laquelle la substance synthétique est une polyéthercétone ou un polysulfure de phénylène aromatique.

## Revendications (Revendications pour l'(les) Etat(s) contractant(s) suivant(s): CY, GR, IE, LU)

1. Utilisation de structures tricotées, qui présentent un catalyseur pour un procédé de séparation réactive.

2. Utilisation selon la revendication 1, dans laquelle la structure tricotée est revêtue avec le catalyseur.
